# EUROPEAN PATENT SPECIFICATION

(11) **EP 4 049 812 B1**
(45) Date of publication and mention of the grant of the patent: **11.12.2024**
(21) Application number: 20878870.3
(22) Date of filing: 25.09.2020
(51) Int. Cl.: B25J 9/16, B25J 15/06, B25J 13/08, G05B 19/4065

(54) **DEGRADATION DETERMINATION DEVICE, DEGRADATION DETERMINATION METHOD, AND CONTROL PROGRAM**
VORRICHTUNG ZUR VERSCHLECHTERUNGSBESTIMMUNG, VERFAHREN ZUR VERSCHLECHTERUNGSBESTIMMUNG UND STEUERPROGRAMM
DISPOSITIF DE DÉTERMINATION DE DÉGRADATION, PROCÉDÉ DE DÉTERMINATION DE DÉGRADATION ET PROGRAMME DE COMMANDE

(30) Priority: 25.10.2019 JP 2019194610
(43) Date of publication of application: 31.08.2022
(73) Proprietor: OMRON Corporation, Shiokoji-dori, Shimogyo-Ku Kyoto-shi Kyoto 600-8530 (JP)
(72) Inventor: DOI, Sayaka, Kyoto-shi, Kyoto 600-8530 (JP); KOGA, Hiroki, Kyoto-shi, Kyoto 600-8530 (JP)
(74) Representative: Horn Kleimann Waitzhofer Schmid-Dreyer Patent- und Rechtsanwälte PartG mbB
(86) International application number: PCT/JP2020/036168
(87) International publication number: WO 2021/079682

(56) References cited:
- WO-A1-2019/101668
- JP-A- 2006 218 578
- JP-A- 2010 082 782
- JP-A- 2010 082 782
- JP-A- 2016 197 096
- JP-A- H03 239 489
- JP-A- H03 239 489
- JP-B2- 4 597 696
- JP-U- H0 438 391
- US-A1- 2010 140 437
- US-A1- 2010 140 437

## Description

### TECHNICAL FIELD

The present invention relates to a suction apparatus.

### BACKGROUND ART

A work robot that includes a robot arm including a plurality of arm members is known in the related art. JP 2015 150622 A discloses, for example, a funnel-shaped suction member having an opening for sucking in external air and holding a workpiece by suction, in which a conductive wire for detecting breakage due to disconnection is provided around the opening.

Document JP H03 239489 A discloses a method of judging a defect of a component suction nozzle. The method has: detecting a center position of the nozzle, rotating the nozzle a predetermined angle, detecting the center position of the nozzle, detecting a shift amount between the center positions of the nozzle, and determining whether a deviation of the nozzle is good or defective based on the shift amount and a predetermined value.

Document WO 2019 101668 A1 discloses a vacuum gripping device having a suction cup that has an elastically deformable conductive track and an electric processing circuit connected thereto. The electric processing circuit periodically measures a resistance of the conductive track and compares the measured resistance values and their evolution with reference data stored therein in order to detect a local reduction of the suction cup, such as a tearing of the suction cup or excessive abrasion of an edge of the suction cup.

### SUMMARY OF THE INVENTION

### PROBLEM TO BE SOLVED BY THE INVENTION

However, the above-described related art has a problem that it is not versatile because it is necessary to manufacture a dedicated suction portion.

An aspect of the present invention has been made in view of such circumstances, and an object of the present invention is to provide a suction apparatus capable of easily determining deterioration of a suction portion.

### MEANS FOR SOLVING THE PROBLEMS

In order to solve the above-described problem, the present invention employs the following configurations.

A deterioration determination apparatus according to an aspect of the present disclosure includes: an information obtainment unit configured to obtain information on deformation of a plurality of regions of a suction portion, which suction portion is configured to hold an object by suction with negative pressure, in a state in which the suction portion does not hold an object by suction; and a deterioration determination unit configured to calculate a ratio of the deformation of the plurality of regions of the suction portion based on the information on the deformation of the plurality of regions of the suction portion in a state in which the suction portion does not hold an object by suction, and determine whether or not the suction portion has deteriorated, depending on that ratio.

A deterioration determination method according to an aspect of the present disclosure includes: an information obtainment step of obtaining information on deformation of a plurality of regions of a suction portion, which suction portion is configured to hold an object by suction with negative pressure, in a state in which the suction portion does not hold an object by suction; and a deterioration determination step of calculating a ratio of the deformation of the plurality of regions of the suction portion based on the information on the deformation of the plurality of regions of the suction portion in a state in which the suction portion does not hold an object by suction, and determining whether or not the suction portion has deteriorated, depending on that ratio.

### EFFECTS OF THE INVENTION

According to an embodiment of the present invention, it is possible to provide a suction apparatus capable of easily determining whether or not a suction portion has deteriorated.

### BRIEF DESCRIPTION OF THE DRAWINGS

- Fig. 1: shows an example of a configuration of a suction apparatus according to an embodiment of the present invention.
- Fig. 2: shows an example of a cross-sectional view taken along line A-A of Fig. 1.
- Fig. 3: shows an example of a configuration of a sensor assembly included in the suction apparatus according to the embodiment of the present invention.
- Fig. 4: shows an example of shapes of a normal state and a deteriorated state of a suction portion included in the suction apparatus according to the embodiment of the present invention.
- Fig. 5: is a block diagram schematically showing an example of a configuration of a suction system according to the embodiment of the present invention.
- Fig. 6: is a flow chart showing how an example of a suction system, not part of the scope of protection, operates.
- Fig. 7: is a flow chart showing how a suction system according to an embodiment of the present invention operates.
- Fig. 8: shows the relationship between the elapsed time from the start of use of the suction portion and sensor values.

### EMBODIMENTS OF THE INVENTION

Hereinafter, an embodiment according to one aspect of the present invention (hereinafter, also referred to as "the present embodiment") will be described with reference to the drawings.

### 1. Application example

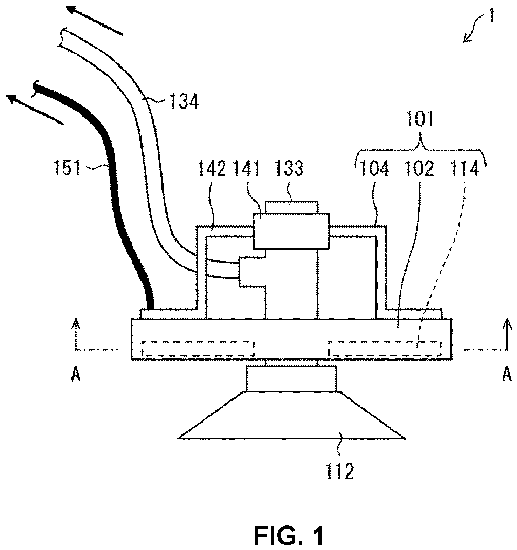

Fig. 1 shows an example of a configuration of a suction apparatus 1 according to the present embodiment. The suction apparatus 1 can be used as a mobile robot for conveying an object.

As shown in Fig. 1, the suction apparatus 1 includes: a sensor assembly 101; a suction portion 112 configured to hold an object by suction with negative pressure; a shaft 133 that supports the suction portion 112 and includes an air passage; and a tube 134 connected to the air passage.

The sensor assembly 101 is attachable to the suction apparatus 1, and includes a body 102, one or more proximity sensors 114, and a fixture 104.

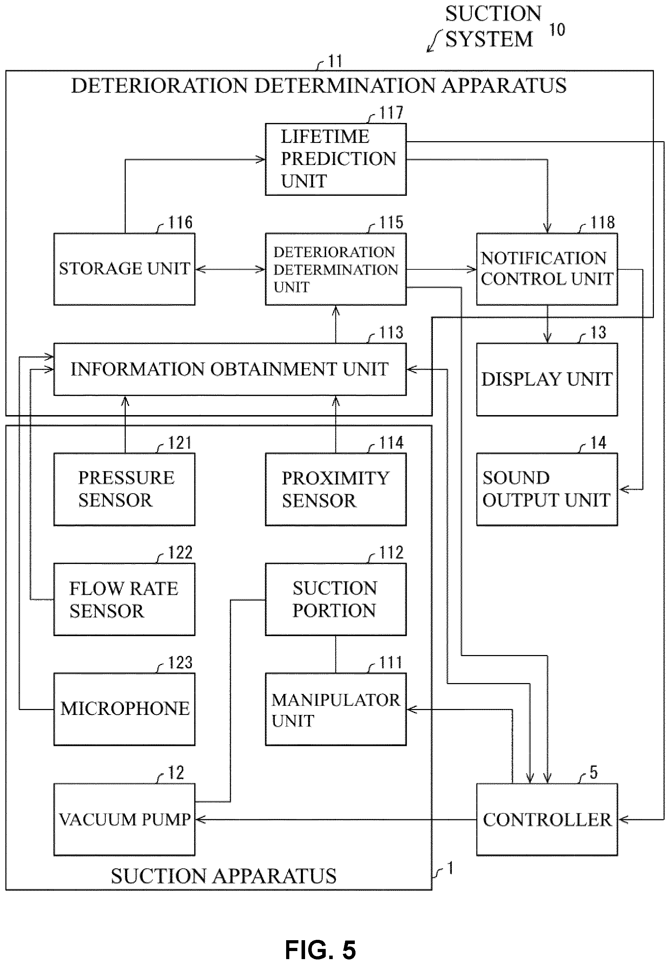

The suction portion 112 may be worn and deformed, or cracked, due to a change over time. The proximity sensor 114 measures deformation of the suction portion 112. A deterioration determination apparatus 11 according to the present embodiment shown in Fig. 5 determines whether or not the suction portion 112 has deteriorated, depending on the deformation of the suction portion 112 in the state in which the suction portion 112 does not hold an object by suction.

### 2. Configuration example

### Suction apparatus

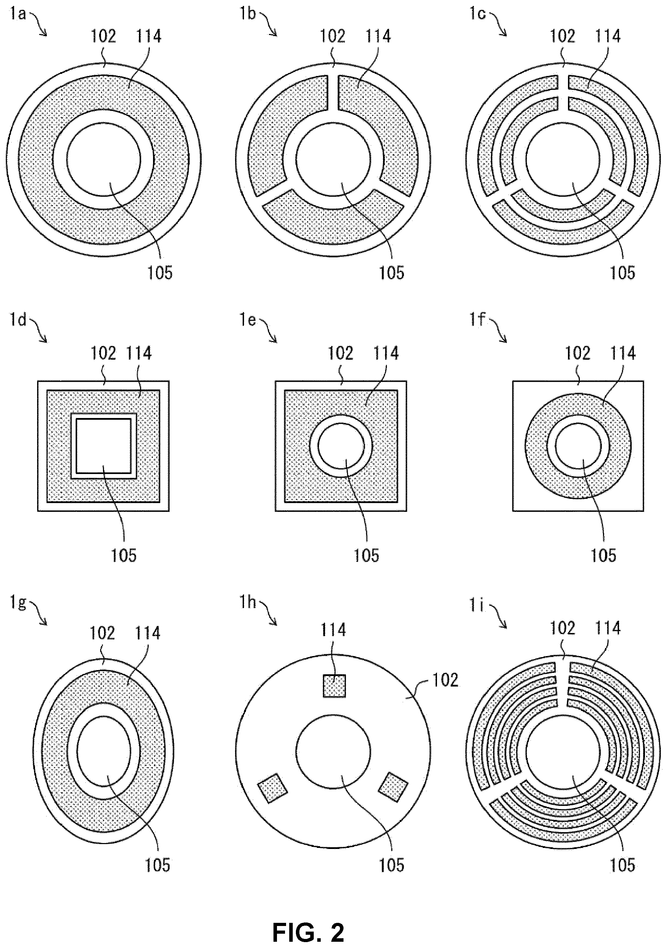

Fig. 1 shows an example of the configuration of the suction apparatus 1. Fig. 2 shows an example of the sensor assembly 101 in a cross-sectional view taken along line A-A of Fig. 1.

As shown in Fig. 1, the suction apparatus 1 includes: the sensor assembly 101; the suction portion 112 configured to hold an object by suction with negative pressure; the shaft 133 that supports the suction portion 112 and includes an air passage, and the tube 134 connected to the air passage. Examples of the suction portion 112 include a suction pad that holds an object by suction with negative pressure.

The sensor assembly 101 is attachable to the suction apparatus 1, and includes the body 102, one or more proximity sensors 114, and the fixture 104. A space through which the shaft 133 passes is formed in the body 102. The proximity sensor 114 is disposed on the body 102, and detects that the suction portion 112 is deformed by negative pressure. The fixture 104 includes a fixed portion 141 that is fixed to the shaft 133, and a support portion 142 that supports the body 102.

The proximity sensor 114 may be a sensor capable of measuring a distance to an object at a short distance, or a senser capable of detecting that an object has approached to a certain distance. Examples of a detection method of the proximity sensor 114 include a capacitive method, an optical method, an electromagnetic induction method, and an acoustic method such as a sound wave method or an ultrasonic method. Also, examples of the capacitive sensor include a self-capacitive sensor and a mutual capacitive sensor. The one or more proximity sensors provided in the sensor assembly may be of the same type, or may be of different types. Instead of the proximity sensor 114 included in the sensor assembly 101, the suction portion 112 may also be provided with a strain sensor that detects strain in one or more regions of the suction portion 112.

The sensor assembly 101 is attachable to the shaft 133 of the suction apparatus 1 that supports the suction portion 112 and has the air passage, and the proximity sensor 114 can be disposed on the suction portion 112. The proximity sensor 114 measures the amount of deformation of the suction portion 112 that is deformed by negative pressure.

In the example of Fig. 1, the suction apparatus 1 includes the sensor assembly 101, the suction portion (suction pad) 112, and the shaft 133. An air passage for sucking in air is provided in the shaft 133. The air passage is connected to the suction portion 112 and the tube 134. The shaft 133 and a vacuum pump that generates negative pressure may be connected through the tube 134. The suction portion 112 of the suction apparatus 1 may be grounded.

Because the suction portion 112 is disposed on one end side of the shaft 133, the sensor assembly 101 is preferably attached to the shaft 133 on other end side of the shaft 133, for example. However, in order to accurately detect the deformation of the suction portion 112, the body 102 is preferably disposed at a position close to the suction portion 112, for example.

The support portion 142 of the fixture 104 extends from the fixed portion 141 toward the suction portion 112. The body 102 is disposed on a suction portion 112 side relative to the fixed portion 141, using the support portion 142. With this configuration, it is possible to fix the fixture 104 to the other end side (the opposite side to the suction portion 112) of the shaft 133, and to dispose the sensor assembly 101 at a position close to the suction portion 112.

### Sensor assembly

A space 105 (not shown) through which the shaft 133 of the suction apparatus 1 passes is formed in the body 102. The space 105 may be a hole, or a notch. The main body 102 is not in contact with the shaft 133, for example. The body 102 may have a circular shape, a quadrangular shape, or an elliptical shape. In addition, the space 105 may have a circular shape, a quadrangular shape, or an elliptical shape. The body 102 and a controller such as a programmable logic controller (PLC) or the deterioration determination apparatus 11 may be connected through a sensor wiring 151.

In the example of a suction apparatus 1a in Fig. 2, the proximity sensor 114 is disposed on the main body 102 along the circumferential direction of the space 105 (the shaft 133). In the example of a suction apparatus 1b in FIG. 2, a plurality of the proximity sensors 114 are disposed on the body 102 along the circumferential direction of the space 105 (the shaft 133). In the example of a suction apparatus 1c in Fig. 2, a plurality of the proximity sensors 114 are disposed on the body 102 along the circumferential direction and the radial direction with respect to the space 105 (the shaft 133). In the example of a suction apparatus 1d in Fig. 2, the space 105 has a quadrangular shape, and the proximity sensor 114 is disposed on the body 102 having a quadrangular outer shape. In the example of a suction apparatus 1e in Fig. 2, the space 105 has a circular shape, and the proximity sensor 114 is disposed on the body 102 having a quadrangular outer shape. In the example of a suction apparatus If in Fig. 2, the proximity sensor 114 is disposed on a quadrangular body 102 in which the space 105 has a circular shape. In the example of a suction apparatus 1g in Fig. 2, the proximity sensor 114 is disposed on an elliptical body 102 in which the space 105 has an elliptical shape. In the example of a suction apparatus 1h in Fig. 2, a plurality of the proximity sensors 114, which are sensor chips, are disposed on the body 102 along the circumferential direction of the space 105 (the shaft 133). In the example of a suction apparatus 1i in Fig. 2, a plurality of the proximity sensors 114 are disposed on the body 102 along the circumferential direction and the radial direction with respect to the space 105 (the shaft 133).

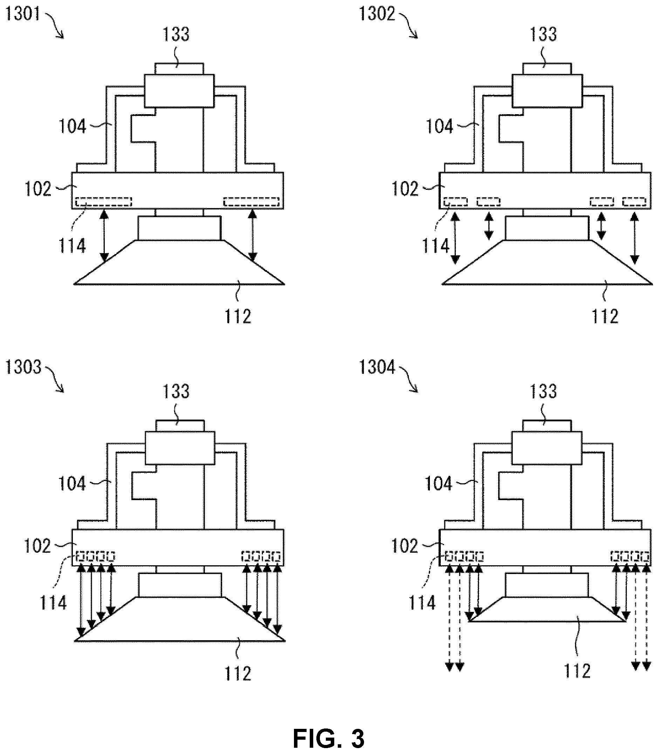

Fig. 3 illustrates an example of the configuration of the sensor assembly 101. In the example 1301 shown in Fig. 3, the sensor assembly 101 includes the main body 102 shown in the example of the suction apparatus 1a shown in Fig. 2. The proximity sensor 114 provided in the body 102 can measure the amount of displacement of the suction portion 112. The proximity sensor 114 is disposed above the suction portion 112. In the example 1302 shown in Fig. 3, the sensor assembly 101 includes the main body 102 shown in the example of the suction apparatus 1c shown in Fig. 2. The plurality of proximity sensors 114 are disposed on the body 102 along the radial direction with respect to the shaft 133. With this configuration, the sensor assembly 101 can individually detect displacement at a plurality of positions in the radial direction of the suction portion 112. In the example 1303 shown in Fig. 3, the sensor assembly 101 includes the main body shown in the example of the suction apparatus 1i shown in Fig. 2. The plurality of proximity sensors 114 are disposed on the body 102, along the circumferential direction and the radial direction with respect to the shaft 133. When the sensor assembly 101 includes the body 102 of the examples of the suction apparatuses 1c or 1i shown in Fig. 2, then a plurality of proximity sensors 114 are disposed in a circle covering the suction portion 112. With this configuration, it is possible to select an appropriate proximity sensor, according to the size of the body. The example 1304 shown in Fig. 3 shows a state in which the suction portion 112 has been worn off compared to the example 1303 shown in Fig. 3. The proximity sensors 114 disposed on the radially outer side detect a region on the radially outer side of the suction portion 112 in a normal state as in the example 1303 shown in Fig. 3, but cannot detect the region on the radially outer side of the suction portion 112 in a worn state (deteriorated state) as in the example 1304 shown in Fig. 3.

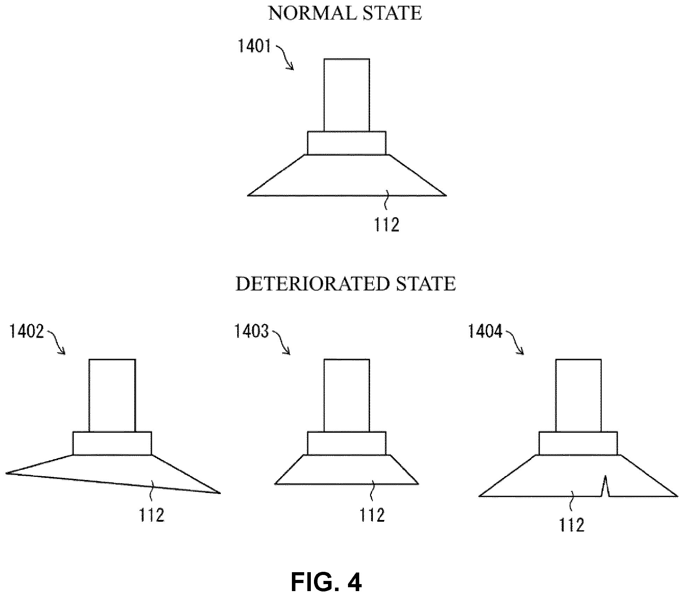

Fig. 4 shows examples of shapes of a normal state and deteriorated states of the suction portion 112. The example 1401 shown in Fig. 4 shows the shape of the suction portion 112 in a normal state, which is unused. The example 1402 shown in Fig. 4 shows the shape of the suction portion 112 in which a part of the distal end portion of the suction portion 112 shown in the example 1401 in Fig. 4 is worn or deformed due to deterioration. The example 1403 shown in Fig. 4 shows a shape of the suction portion 112 in a state in which the distal end portion of the suction portion 112 in the example 1401 shown in Fig. 4 is worn, and deformed as a whole due to deterioration. The example 1404 shown in Fig. 4 shows a shape of the suction portion 112 in a state in which there is a crack in the suction portion 112 of the example 1401 shown in Fig. 4. The proximity sensor 114 outputs different sensor values in the normal state shown in the example 1401 in Fig. 4 and in the deteriorated states shown in the examples 1402 to 1404 in Fig. 4. When the distance between the proximity sensor 114 and the suction portion 112 changes due to deterioration, the sensor value that is output from the proximity sensor 114 changes. Also, when the electrostatic capacitance of the suction portion 112 changes due to wear, the sensor value output from the capacitive proximity sensor 114 changes. When a crack occurs in the measurement region of the proximity sensor 114 in the suction portion 112, the distance from the proximity sensor 114 to the measurement region may change, and thus the sensor value output from the proximity sensor 114 may change. Instead of the proximity sensor 114, a strain sensor may also be attached to the surface of the suction portion 112. The strain sensor outputs a sensor value that corresponds to the deformation of the suction portion 112. Accordingly, in the deteriorated states shown in examples 1402 to 1404 in Fig. 4, the sensor value output from the strain sensor changes in accordance with the deformation of the suction portion 112.

### Suction system

Next, an example of a hardware configuration of the suction system 10 including the deterioration determination apparatus according to the present embodiment will be described with reference to Fig. 5.

Fig. 5 is a block diagram schematically showing an example of the configuration of the suction system 10 according to the present embodiment. In the example of Fig. 5, the suction system 10 according to the present embodiment includes a suction apparatus 1, a controller 5, a deterioration determination apparatus 11, a display unit 13, and a sound output unit 14. In the present embodiment, the suction apparatus 1 may be a fixed suction apparatus that is fixed at a predetermined position, or may also be a movable suction apparatus including an automated guided vehicle.

### Suction apparatus

The suction apparatus 1 includes a manipulator unit 111, a suction portion 112, a vacuum pump 12, a proximity sensor 114, a pressure sensor 121, a flow rate sensor 122, and a microphone 123.

### Manipulator unit

The manipulator unit 111 is driven together with the suction portion 112, under control of the controller 5. The manipulator unit 111 is, for example, an articulated robot arm having one or a plurality of joints.

### Suction portion

When the suction portion 112 is positioned at a work position by driving of the manipulator unit 111, the suction portion 112 holds an object by suction with negative pressure that corresponds to the driving amount of the vacuum pump 12. The suction portion 112 is elastically deformed by negative pressure, and is brought into intimate contact with an object. In this manner, the suction portion 112 holds the object.

### Vacuum pump

The vacuum pump 12 generates negative pressure that corresponds to the driving amount, and provides the generated negative pressure to the suction portion 112. Here, an example in which the suction apparatus 1 in the suction system 10 includes the vacuum pump 12 is described. However, in the present embodiment, the suction apparatus 1 in the suction system 10 does not necessarily have to include the vacuum pump 12, and for example, the vacuum pump 12 may also be provided outside the suction apparatus 1 and the suction system 10. Also with this configuration, the controller 5 controls the driving amount of the vacuum pump 12, so that the same effect as in the above-described example can be achieved.

### Pressure sensor

The pressure sensor 121 measures pressure P inside the suction portion 112 in which negative pressure is generated using the vacuum pump 12, and outputs information indicating the pressure P to the information obtainment unit 113.

### Flow rate sensor

The flow rate sensor 122 is disposed with respect to, for example, the tube 134, measures a flow rate of air flowing through the tube 134, and outputs information indicating the flow rate to the information obtainment unit 113.

### Microphone

The microphone 123 is disposed near the tube 134, and measures sound generated due to flow of air. Examples of the sound include a sound generated when an object is held by suction with the suction portion 112 and air flowing into the air passage from a portion between the object and the suction portion 112 is blocked, and a sound generated due to air flowing through the tube. The sound measured by the microphone 123 varies depending on the flow rate of air. The microphone 123 outputs information on the measured sound to the information obtainment unit 113, as sound data.

### Controller

The controller 5 includes, for example, a central processing unit (CPU), and a random access memory (RAM) or a read only memory (ROM), and performs control in response to an information process. In addition, the controller 5 controls the manipulator unit 111. In this manner, the controller 5 moves the suction portion 112 through the manipulator unit 111. Specifically, the controller 5 drives the manipulator unit 111 so that the suction portion 112 is positioned at a work position where the suction portion 112 can hold an object by suction. Also, the controller 5 may also operate the manipulator unit 111 so that the angle of the suction portion 112 with respect to the object reaches a predetermined angle, after the suction portion 112 is positioned at the work position. In this manner, the position of the suction portion 112 can be finely adjusted to a more suitable position. Furthermore, the controller 5 controls the vacuum pump 12. In this manner, the controller 5 drives the vacuum pump 12, and causes the suction portion 112 to hold an object by suction. The controller 5 outputs, to the deterioration determination apparatus 11, information on the mass of an object to be held by suction and information whether or not the suction portion 112 is currently holding an object by suction.

In the present embodiment, an example is described in which the controller 5 included in the suction system 10 is provided outside the suction apparatus 1 and the deterioration determination apparatus 11. However, the present invention is not limited to the above configuration, and for example, the suction apparatus 1 may also include the controller 5, or the deterioration determination apparatus 11 may also include the controller 5.

The suction apparatus 1 may be configured to be operated by a battery, or may also be configured to be supplied with electric power from the outside of the suction apparatus 1 through a power cord.

### Deterioration determination apparatus

The deterioration determination apparatus 11 includes an information obtainment unit 113, a deterioration determination unit 115, a storage unit 116, a lifetime prediction unit 117, and a notification control unit 118.

### Information obtainment unit

The information obtainment unit 113 obtains information on deformation of a plurality of regions of the suction portion 112. In this manner, the deterioration determination apparatus 11 can strictly determine a deteriorated region of the suction portion 112. The information obtainment unit 113 obtains, for example, data indicating the deformation amount of the suction portion 112 from the proximity sensor 114, and specifies the deformation amount of the suction portion 112. Also, the information obtainment unit 113 obtains, from the pressure sensor 121, information indicating pressure. The information obtainment unit 113 obtains, from the flow rate sensor 122, information indicating the flow rate of air flowing through the tube 134. The information obtainment unit 113 obtains sound data from the microphone 123. Furthermore, the information obtainment unit 113 obtains, from the controller 5, information indicating whether or not the suction portion 112 is currently holding an object by suction. The information obtainment unit 113 outputs, to the deterioration determination unit 115, the information indicating the deformation amount, the information indicating the pressure, the information indicating the flow rate of air, the sound data, and the information indicating whether or not the suction portion 112 is currently holding an object by suction.

The information obtainment unit 113 outputs, to the controller 5, deformation data such as deformation amount, deformation speed, or deformation acceleration of the suction portion 112.

### Deterioration determination unit 115

According to the invention, the deterioration unit 115 calculates a ratio of the deformation of a plurality of regions of the suction portion 112 in the state in which the suction portion 112 does not hold an object by suction, based on information on deformation of the plurality of regions of the suction portion 112. When a metal piece or the like is attached to a partial region of the suction portion 112, a deviation occurs in the sensor values of the proximity sensors 114, even when the suction portion 112 is in a normal state. When the sensor values of the proximity sensors 114 are deviated even when the suction portion 112 is in a normal state, the deterioration determination unit 115 may also calculate a ratio that is corrected by the sensor value obtained when the suction portion 112 is in a normal state.

Specifically, a case where the ratio is calculated from the sensor values obtained from the three proximity sensors 114 will be described. The sensor values of the three proximity sensors 114 in the normal state are referred to as values d1o, d2o, and d3o, and the sensor values of the three proximity sensors 114 for determining deterioration are referred to as values d1, d2, and d3. The deterioration determination unit 115 may determine whether or not the suction portion 112 has deteriorated, according to whether or not d1/d1o:d2/d2o:d3/d3o is within a normal range. When (d2/d2o)/(d1/d1o) is within a predetermined range and (d3/d3o)/(d1/d1o) is within a predetermined range, for example, the deterioration determination unit 115 may determine that the ratio of d1/d1o:d2/d2o:d3/d3o is within a normal range.

Alternatively, more simply, when d2/d1 is within a predetermined range and d3/d1 is within a predetermined range, the deterioration determination unit 115 may also determine that the deformation ratio dl:d2:d3 of each region is within a normal range.

The deterioration determination unit 115 determines whether or not the suction portion 112 has deteriorated, depending on the calculated ratio. The deterioration determination unit 115 determines whether or not the suction portion 112 has deteriorated, depending on whether or not the calculated ratio is within a normal range that has been set for a plurality of regions of the suction portion 112. The normal range may be a range including a ratio that has been set in advance as a ratio indicating that the suction portion is normal, or a range including a ratio when the suction portion is in an initial state.

By calculating the ratio of deformation of a plurality of regions of the suction portion 112 in the state in which the suction portion 112 does not hold an object by suction, and determining whether or not the suction portion has deteriorated according to the calculated ratio, it is possible to accurately determine whether or not the suction portion 112 has deteriorated, even if the sensor values fluctuate due to the influence of the environment such as temperature.

The deterioration determination unit 115 outputs, to the controller 5, a signal whether or not to continue the operation. When it is determined that the suction portion 112 has not deteriorated, the deterioration determination unit 115 outputs, to the controller 5, a signal for continuing the operation. When it is determined that the suction portion 112 has deteriorated, the deterioration determination unit 115 outputs, to the controller 5, a signal for stopping the operation.

The storage unit 116 stores information on deformation of the one or more regions of the suction portion 112 obtained by the deterioration determination unit 115 from the information obtainment unit 113, the date and time when deformation is measured, and a result of the determination performed by the deterioration determination unit 115. The storage unit 116 is, for example, an auxiliary storage device such as a hard disk drive or a solid state drive.

The lifetime prediction unit 117 obtains, from the storage unit 116, time-series information in a predetermined period indicating deformation of the one or more regions of the suction portion 112 in the state in which the suction portion 112 does not hold an object by suction. The lifetime prediction unit 117 predicts the lifetime of the suction portion 112 from a temporal change in the deformation of the one or more regions of the suction portion 112 in the state in which the suction portion 112 does not hold an object by suction.

The lifetime prediction unit 117 outputs, to the controller 5, a signal indicating whether or not to continue the operation, depending on the predicted lifetime of the suction portion 112. The lifetime prediction unit 117 may output, to the controller 5, a signal for stopping the operation when the suction portion 112 reaches the end of its lifetime, or may also output, to the controller 5, a signal for stopping the operation before a predetermined period from the end of the lifetime of the suction portion 112. When the lifetime prediction unit 117 predicts that, for example, the end of lifetime will be reached when the suction portion 112 holds an object by suction 100 more times and stops the operation at 80 suctions before the end of lifetime, the lifetime prediction unit 117 may also output, to the controller 5, a signal for stopping the operation when the suction portion 112 holds an object by suction another 20 times.

When the deterioration determination unit 115 determines that the suction portion 112 has deteriorated, the notification control unit 118 may notify at least one of the display unit 13 and the sound output unit 14 that the suction portion 112 has deteriorated. The notification control unit 118 may cause, for example, for notifying deterioration of the suction portion 112, the display unit 13 to emit light of a predetermined color or display an image for notifying deterioration of the suction portion 112, or may also cause the sound output unit 14 to output a predetermined sound for notifying deterioration of the suction portion 112.

The notification control unit 118 may also notify at least one of the display unit 13 and the sound output unit 14 that the lifetime of the suction portion 112 predicted by the lifetime prediction unit 117 is close to its end. The notification control unit 118 may also notify, for example, at least one of the display unit 13 and the sound output unit 14 that the suction portion 112 will reach the end of its lifetime after a predetermined period has elapsed, at a point in time before the predetermined period. Specifically, for example, the notification control unit 118 may also cause the display unit 13 to emit light of a predetermined color or display an image, for notifying that the suction portion 112 will reach the end of its lifetime after a predetermined period has elapsed. Alternatively, the notification control unit 118 may also cause the sound output unit 14 to output a predetermined sound, for notifying that the suction portion 112 will reach the end of its lifetime after a predetermined period has elapsed. The predetermined period is not limited to a specific period, but is, for example, one month.

### Display unit

The display unit 13 displays light or an image, in accordance with an instruction transmitted from the notification control unit 118. The display unit 13 is not limited to a specific device as long as it emits light or displays an image, and examples of the display unit 13 include a lamp or a display.

### Sound output unit

The sound output unit 14 outputs sound, in accordance with an instruction transmitted from the notification control unit 118. Examples of the sound include a buzzer sound, for example. The sound output unit 14 is not limited to a specific device as long as it outputs sound, and examples of the sound output unit 14 include a speaker.

### 3. Operation example

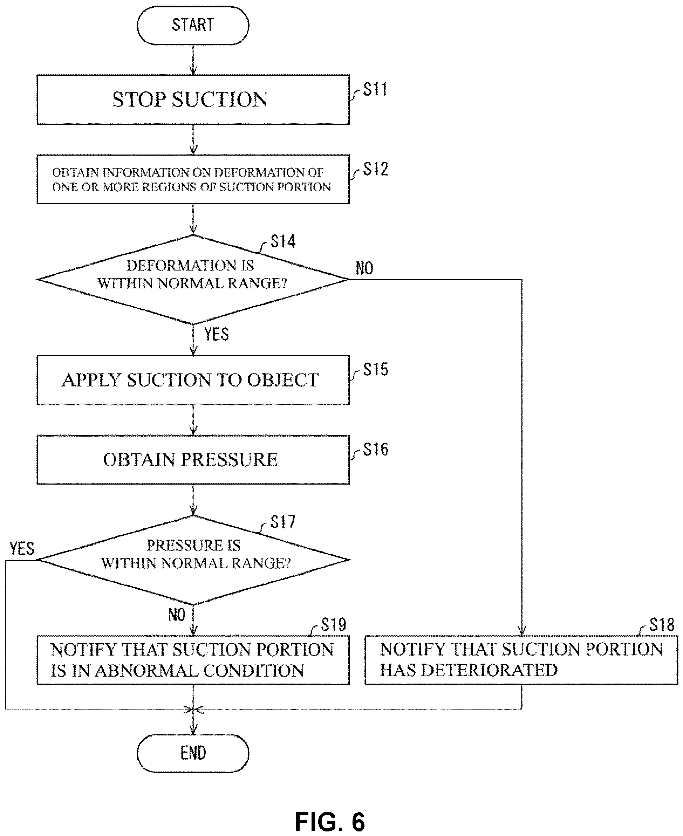

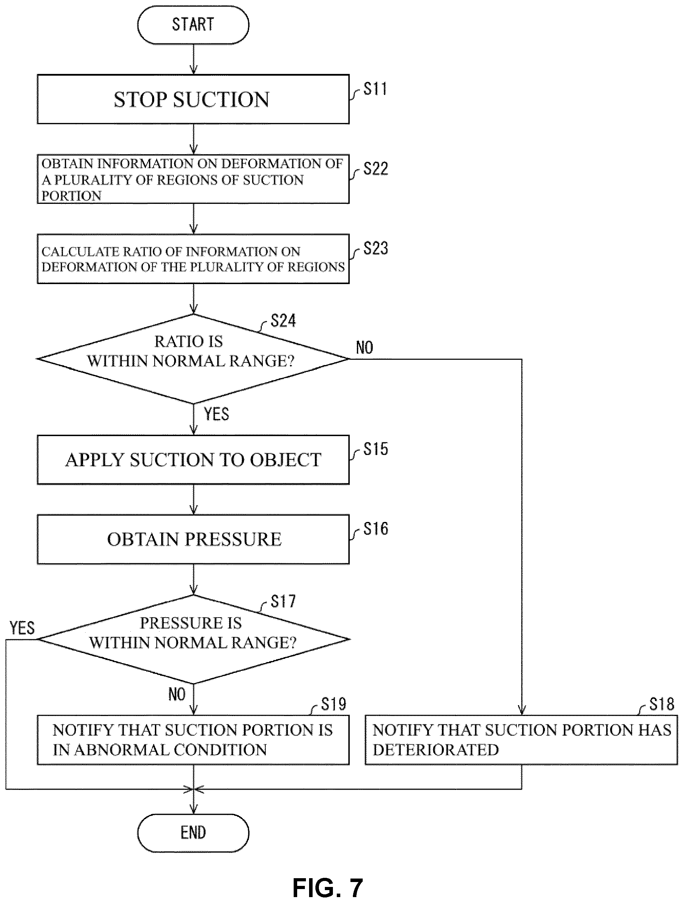

Next, an operation example of the suction system 10 will be described with reference to Figs. 6 and 7. The operation procedure described below is merely an example, and may be changed to the extent possible.

### Operation example 1

Fig. 6 is a flow chart showing how the suction system 10, not part of the scope of protection, operates.

### Step S11

First, in step S11, the controller 5 included in the suction apparatus 1 controls the vacuum pump 12 so as not to generate negative pressure, thereby stopping suction. By stopping suction, the vibration of the suction portion 112 can be reduced, and thus the deterioration of the suction portion 112 can be detected more accurately. The proximity sensor 114 can detect deformation of one or more regions of the suction portion 112 in a state in which the suction portion 112 does not hold an object by suction. A signal indicating that the suction portion 112 is not holding an object by suction is input from the controller 5 to the information obtainment unit 113. In this step, it is also possible that suction is not stopped, as long as the suction portion 112 is not holding an object by suction.

### Step S12

Next, in step S12 (information obtainment step), the information obtainment unit 113 included in the deterioration determination apparatus 11 obtains, from the proximity sensor 114, information on the deformation of the one or more regions of the suction portion 112 in the state in which the suction portion 112 does not hold an object by suction.

### Step S14

Next, in step S14 (deterioration determination step), the deterioration determination unit 115 included in the deterioration determination apparatus 11 determines whether or not the suction portion 112 has deteriorated, in accordance with the deformation of the one or more regions of the suction portion 112 in the state in which the suction portion 112 does not hold an object by suction.

In step S14, the deterioration determination unit 115 determines whether or not the suction portion 112 has deteriorated, depending on whether or not the deformation of the one or more regions of the suction portion 112 in the state in which the suction portion 112 does not hold an object by suction is within a normal range that is set for the one or more regions of the suction portion 112.

In step S14, when the deformation of the one or more region of the suction portion 112 in the state in which the suction portion 112 does not hold an object by suction is within a normal range, the deterioration determination unit 115 determines that the suction portion 112 has not deteriorated, that is to say, the deterioration determination unit 115 determines that the suction portion 112 is in a normal condition. In step S14, when the deformation of the one or more regions of the suction portion 112 is outside the normal range, the deterioration determination unit 115 determines that the suction portion 112 has deteriorated.

When the deterioration determination unit 115 determines that the suction portion 112 has not deteriorated (YES in step S14), the process proceeds to step S15. In contrast, when the deterioration determination unit 115 determines that the suction portion 112 has deteriorated (NO in step S14), the process proceeds to step S18.

### Step S15

Next, in step S15, the controller 5 included in the suction apparatus 1 causes the vacuum pump 12 to generate negative pressure that corresponds to the driving amount. In this manner, the vacuum pump 12 causes the suction portion 112 to hold an object by suction. A signal indicating that the suction portion 112 is holding an object by suction is input from the controller 5 to the information obtainment unit 113.

### Step S16

Next, in step S16, the information obtainment unit 113 included in the deterioration determination apparatus 11 obtains, from the pressure sensor 121, the internal pressure of the suction portion 112 currently holding the object by suction. In step S16, the information obtainment unit 113 may also obtain, from the flow rate sensor 122, the flow rate of air flowing through the tube 134, instead of obtaining the pressure. Alternatively, the information obtainment unit 113 may also obtain, from the microphone 123, the sound generated due to the flow of air.

### Step S17

Next, in step S17, the deterioration determination unit 115 determines whether or not the suction portion 112 has deteriorated, depending on the pressure obtained in step S16.

In step S17, the deterioration determination unit 115 determines whether or not the suction portion 112 is in an abnormal condition, according to whether or not the pressure obtained in step S16 is within a normal range that is set for the suction portion 112. Examples of an abnormal condition in the suction portion 112 include not only deterioration, but also a state in which dust or the like is sandwiched between the suction portion 112 and an object.

In step S17, when the pressure obtained in step S16 is within the normal range, the deterioration determination unit 115 determines that the suction portion 112 is not in an abnormal condition. In contrast, in step S17, when the pressure obtained in step S16 is outside the normal range, the deterioration determination unit 115 determines that the suction portion 112 is in an abnormal condition. When a crack occurs in the suction portion 112, for example, air flows into the suction portion 112, and thus the decrease in pressure is reduced. Similarly, when the suction portion 112 is deformed due to deterioration, the suction portion 112 does not come into intimate contact with an object, and air may flow into the suction portion 112. Also, when dust or the like is sandwiched between the suction portion 112 and an object, the suction portion 112 does not come into intimate contact with the object, and air may flow into the suction portion 112.

When the deterioration determination unit 115 determines that the suction portion 112 is not in an abnormal condition (YES in step S17), the deterioration determination unit 115 ends the deterioration determination process. In contrast, when the deterioration determination unit 115 determines that the suction portion 112 is in an abnormal condition (NO in step S17), the process proceeds to step S19.

In step S17, when the information obtainment unit 113 obtains the flow rate of air instead of pressure in step S16, the deterioration determination unit 115 may also determine whether the suction portion 112 is in an abnormal condition, according to the flow rate. Similarly, when the information obtainment unit 113 obtains sound instead of pressure in step S16, the deterioration determination unit 115 may also determine whether the suction portion 112 is in an abnormal condition, according to the sound. When air flows into the suction portion 112, for example, the flow rate of air or the sound increases due to the flow of air. In order to determine whether or not the suction portion 112 is in an abnormal condition, the suction system 10 may include any one of the pressure sensor 121, the flow rate sensor 122, and the microphone 123 (the other two devices may be omitted).

### Step S18

Next, in step S18, when the deterioration determination unit 115 determines that the suction portion 112 has deteriorated, the notification control unit 118 notifies at least one of the display unit 13 and the sound output unit 14 that the suction portion 112 has deteriorated.

### Step S19

In step S19, when the deterioration determination unit 115 determines that the suction portion 112 is in an abnormal condition, the notification control unit 118 notifies at least one of the display unit 13 and the sound output unit 14 that the suction portion 112 is in an abnormal condition.

According to the above-described operation example, by detecting deformation of one or more regions of the suction portion 112 in the state in which the suction portion 112 does not hold an object by suction, it is possible to detect how much the suction portion 112 has deteriorated, based on the degree of deformation of the suction portion 112. As a result, it is possible to determine whether or not the suction portion 112 has deteriorated, in accordance with the degree of deformation of the suction portion 112.

### Operation example 2

Fig. 7 is a flow chart showing how a suction system according to an embodiment of the present invention operates. Steps S11, S12, and S15 to S18 are as described in "operation example 1", and thus only different points will be described.

### Step S22

Next, in step S22 (information obtainment step), the information obtainment unit 113 included in the deterioration determination apparatus 11 obtains, from the proximity sensor 114, information on deformation of a plurality of regions of the suction portion 112 in the state in which the suction portion 112 does not hold an object by suction.

### Step S23

In step S23 (deterioration determination step), the deterioration determination unit 115 calculates a ratio of the deformation of the plurality of regions of the suction portion 112, based on the information on deformation of the plurality of regions of the suction portion 112 in the state in which the suction portion 112 does not hold an object by suction.

### Step S24

In step S24 (deterioration determination step), the deterioration determination unit 115 determines whether or not the suction portion 112 has deteriorated, depending on the calculated ratio.

In step S24, the deterioration determination unit 115 determines whether or not the suction portion 112 has deteriorated, depending on whether or not the calculated ratio is within a normal range that has been set for the plurality of regions of the suction portion 112.

In step S24, when the calculated ratio is within a normal range, the deterioration determination unit 115 determines that the suction portion 112 has not deteriorated. In contrast, in step S24, when the calculated ratio is outside the normal range, the deterioration determination unit 115 determines that the suction portion 112 has deteriorated.

When the deterioration determination unit 115 determines that the suction portion 112 has not deteriorated (YES in step S24), the process proceeds to step S15. In contrast, when the deterioration determination unit 115 determines that the suction portion 112 has deteriorated (NO in step S24), the process proceeds to step S18.

According to the above-described operation example, it is possible to strictly determine a deteriorated region of the suction portion 112, by obtaining information on deformation of a plurality of regions of the suction portion 112 in a state in which the suction portion 112 does not hold an object by suction. Furthermore, by calculating the ratio of deformation of the plurality of regions of the suction portion 112, and determining whether or not the suction portion 112 has deteriorated according to the calculated ratio, it is possible to accurately determine whether or not the suction portion 112 has deteriorated, even if the sensor value fluctuates due to the influence of the environment such as temperature.

### Operation example 3

The lifetime prediction unit 117 obtains, from the storage unit 116, information on deformation of one or more regions of the suction portion 112 in a state in which the suction portion 112 does not hold an object by suction, and predicts the lifetime of the suction portion 112 based on a temporal change in deformation of the one or more regions. The lifetime prediction unit 117 can predict the lifetime of the suction portion 112, based on a temporal change of a sensor value due to deformation caused by deterioration or due to wear.

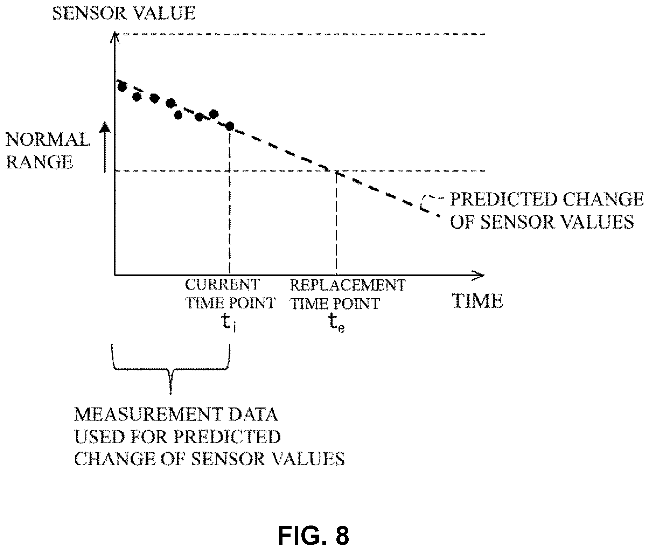

Fig. 8 shows the relationship between the elapsed time from the start of use of the suction portion 112 and sensor values. The lifetime prediction unit 117 obtains, for example, from the storage unit 116, sensor values measured by the proximity sensor 114 from the start of use of the suction portion 112 to the time point tᵢ. The lifetime prediction unit 117 obtains a curve indicating a predicted change of sensor values, based on the obtained sensor values from the start of use of the suction portion 112 to the time point tᵢ. The lifetime prediction unit 117 obtains, for example, a curve indicating the predicted change of sensor values using the sensor values in a predetermined period up to time point tᵢ. The lifetime prediction unit 117 can predict the replacement time tₑ from the intersection of the obtained curve and the threshold value in the normal range.

When the suction apparatus 1 includes a plurality of proximity sensors 114, the lifetime prediction unit 117 may also predict the lifetime of the suction portion 112 using a total value or an average value of sensor output values of the proximity sensors 114, or the number of proximity sensors 114 whose outputs are ON. Here, the fact that the output of a proximity sensor 114 is ON means that an object is present within a certain distance.

According to the operation example described above, it is possible to replace the suction portion 112 at an appropriate time by predicting the lifetime of the suction portion 112. Furthermore, because the maintenance schedule can be determined before an abnormality occurs in the suction portion 112, it is possible to avoid an unexpected stop of the production line.

### Implementation example using software

Control blocks (in particular, the information obtainment unit 113, the deterioration determination unit 115, the lifetime prediction unit 117, and the notification control unit 118) included in the deterioration determination apparatus 11 may be implemented by a logic circuit (hardware) formed in an integrated circuit (IC chip) or the like, or may also be implemented by software.

In the latter case, the deterioration determination apparatus 11 includes a computer that executes instructions of a program, which is software for implementing the functions. The computer includes, for example, one or more processors, and a computer-readable recording medium storing the program. In the computer, the processor reads the program from the recording medium and executes the program, thereby achieving the object of the present invention. As the processor, for example, a central processing unit (CPU) can be used. As the recording medium, a "non-transitory tangible medium" such as a read only memory (ROM), a tape, a disk, a card, a semiconductor memory, or a programmable logic circuit can be used. In addition, the deterioration determination apparatus 11 may further include, for example, a random access memory (RAM) that develops the program. The program may be supplied to the computer through any transmission medium (for example, a communication network, or a broadcast wave) capable of transmitting the program. One aspect of the present invention can be also achieved in the form of a data signal embedded in a carrier wave in which the program is embodied by electronic transmission.

### INDEX TO THE REFERENCE NUMERALS

- 1, 1a, 1b, 1c, 1d, le, 1f, 1g, 1h, 1i: Suction apparatus
- 5: Controller
- 10: Suction system
- 11: Deterioration determination apparatus
- 12: Vacuum pump
- 13: Display unit
- 14: Sound output unit
- 101: Sensor assembly
- 102: Body
- 104: Fixture
- 105: Space
- 111: Manipulator unit
- 112: Suction portion
- 113: Information obtainment unit
- 114: Proximity sensor
- 115: Deterioration determination unit
- 116: Storage unit
- 117: Lifetime prediction unit
- 118: Notification control unit
- 121: Pressure sensor
- 122: Flow rate sensor
- 123: Microphone
- 134: Tube
- 141: Fixed portion
- 142: Support portion
- 151: Sensor wiring

## Claims

1. A deterioration determination apparatus (11), comprising:
an information obtainment unit (113) configured to obtain information on deformation of a plurality of regions of a suction portion (112), which suction portion (112) is configured to hold an object by suction with negative pressure, in a state in which the suction portion (112) does not hold an object by suction; and
a deterioration determination unit (115) configured to:
calculate a ratio of the deformation of the plurality of regions of the suction portion (112) based on the information on the deformation of the plurality of regions of the suction portion (112) in a state in which the suction portion (112) does not hold an object by suction, and
determine whether or not the suction portion (112) has deteriorated, depending on that ratio.

2. The deterioration determination apparatus (11) according claim 1, further comprising:
a lifetime prediction unit (117) configured to predict a lifetime of the suction portion (112), based on a temporal change in the deformation of the plurality of regions of the suction portion (112) in the state in which the suction portion (112) does not hold an object by suction.

3. The deterioration determination apparatus (11) according to any one of claims 1 to 2,
wherein the information obtainment unit (113) is configured to obtain information indicating an internal pressure of the suction portion (112) currently holding the object by suction, information indicating the flow rate of air flowing through a tube connected to an air passage, or, as sound data, information regarding sound generated due to the flow of air, and
the deterioration determination unit (115) is configured to determine whether or not the suction portion (112) is in an abnormal condition, depending on the pressure, the flow rate of air, or the sound.

4. A deterioration determination method, comprising:
an information obtainment step of obtaining information on deformation of a plurality regions of a suction portion (112), which suction portion (112) is configured to hold an object by suction with negative pressure, in a state in which the suction portion (112) does not hold an object by suction; and
a deterioration determination step of: calculating a ratio of the deformation of the plurality of regions of the suction portion (112) based on the information on the deformation of the plurality of regions of the suction portion (112) in a state in which the suction portion (112) does not hold an object by suction, and determining whether or not the suction portion (112) has deteriorated, depending on that ratio.

5. A control program for causing a computer to function as the deterioration determination apparatus (11) according to claim 1, wherein the control program causes the computer to function as the information obtainment unit (113) and the deterioration determination unit (115).

## Patentansprüche

1. Verschlechterungsbestimmungsvorrichtung (11), aufweisend:
eine Informationserhaltungseinheit (113), die eingerichtet ist, Informationen über eine Verformung von mehreren Bereichen eines Saugabschnitts (112) zu erhalten, wobei der Saugabschnitt (112) eingerichtet ist, ein Objekt durch Saugen mit Unterdruck zu halten, in einem Zustand, in dem der Saugabschnitt (112) ein Objekt nicht durch Saugen hält; und
eine Verschlechterungsbestimmungseinheit (115), die eingerichtet ist:
ein Verhältnis der Verformung der mehreren Bereiche des Saugabschnitts (112) basierend auf den Informationen über die Verformung der mehreren Bereiche des Saugabschnitts (112) in einem Zustand zu berechnen, in dem der Saugabschnitt (112) ein Objekt nicht durch Saugen hält, und
abhängig von diesem Verhältnis zu bestimmen, ob sich der Saugabschnitt (112) verschlechtert hat oder nicht.

2. Verschlechterungsbestimmungsvorrichtung (11) nach Anspruch 1, ferner aufweisend:
eine Lebensdauervorhersageeinheit (117), die eingerichtet ist, eine Lebensdauer des Saugabschnitts (112) basierend auf einer zeitlichen Änderung der Verformung der mehreren Bereiche des Saugabschnitts (112) in dem Zustand vorherzusagen, in dem der Saugabschnitt (112) ein Objekt nicht durch Saugen hält.

3. Verschlechterungsbestimmungsvorrichtung (11) nach einem der Ansprüche 1 bis 2,
wobei die Informationserhaltungseinheit (113) eingerichtet ist, Informationen, die einen Innendruck des Saugabschnitts (112) angeben, der das Objekt gegenwärtig durch Saugen hält, Informationen, die die Strömungsrate von Luft angeben, die durch ein Rohr strömt, das mit einem Luftkanal verbunden ist, oder, als Tondaten, Informationen bezüglich einen Ton, der aufgrund der Luftströmung erzeugt wird, zu erhalten, und
die Verschlechterungsbestimmungseinheit (115) eingerichtet ist, abhängig von dem Druck, der Strömungsrate der Luft oder dem Ton zu bestimmen, ob sich der Saugabschnitt (112) in einem anormalen Zustand befindet oder nicht.

4. Verschlechterungsbestimmungsverfahren, aufweisend:
einen Informationserhaltungsschritt des Erhaltens von Informationen über eine Verformung von mehreren Bereichen eines Saugabschnitts (112), wobei der Saugabschnitt (112) eingerichtet ist, ein Objekt durch Saugen mit Unterdruck zu halten, in einem Zustand, in dem der Saugabschnitt (112) ein Objekt nicht durch Saugen hält; und
einen Verschlechterungsbestimmungsschritt des: Berechnens eines Verhältnisses der Verformung der mehreren Bereiche des Saugabschnitts (112) basierend auf den Informationen über die Verformung der mehreren Bereiche des Saugabschnitts (112) in einem Zustand, in dem der Saugabschnitt (112) ein Objekt nicht durch Saugen hält, und Bestimmens, ob sich der Saugabschnitt (112) verschlechtert hat oder nicht, abhängig von diesem Verhältnis.

5. Steuerprogramm zum Bewirken, dass ein Computer als die Verschlechterungsbestimmungsvorrichtung (11) nach Anspruch 1 fungiert, wobei das Steuerprogramm bewirkt, dass der Computer als die Informationserhaltungseinheit (113) und die Verschlechterungsbestimmungseinheit (115) fungiert.

## Revendications

1. Appareil de détermination de détérioration (11), comprenant :
une unité d'obtention d'informations (113) configurée pour obtenir des informations sur la déformation d'une pluralité de régions d'une partie d'aspiration (112), laquelle partie d'aspiration (112) est configurée pour maintenir un objet par aspiration avec une pression négative, dans un état dans lequel la partie d'aspiration (112) ne maintient pas un objet par aspiration ; et
une unité de détermination de détérioration (115) configurée pour :
calculer un rapport de la déformation de la pluralité de régions de la partie d'aspiration (112) sur la base des informations sur la déformation de la pluralité de régions de la partie d'aspiration (112) dans un état dans lequel la partie d'aspiration (112) ne maintient pas un objet par aspiration, et
déterminer si la partie d'aspiration (112) s'est détériorée ou non, en fonction de ce rapport.

2. Appareil de détermination de détérioration (11) selon la revendication 1, comprenant en outre :
une unité de prédiction de durée de vie (117) configurée pour prédire une durée de vie de la partie d'aspiration (112), sur la base d'un changement temporel de la déformation de la pluralité de régions de la partie d'aspiration (112) dans l'état dans lequel la partie d'aspiration (112) ne maintient pas un objet par aspiration.

3. Appareil de détermination de détérioration (11) selon l'une quelconque des revendications 1 à 2,
dans lequel l'unité d'obtention d'informations (113) est configurée pour obtenir des informations indiquant une pression interne de la partie d'aspiration (112) maintenant actuellement l'objet par aspiration, des informations indiquant le débit d'air s'écoulant à travers un tube relié à un passage d'air, ou, en tant que données sonores, des informations concernant le son généré en raison de l'écoulement d'air, et
l'unité de détermination de détérioration (115) est configurée pour déterminer si la partie d'aspiration (112) est dans un état anormal ou non, en fonction de la pression, du débit d'air, ou du son.

4. Procédé de détermination de détérioration, comprenant :
une étape d'obtention d'informations consistant à obtenir des informations sur la déformation d'une pluralité de régions d'une partie d'aspiration (112), laquelle partie d'aspiration (112) est configurée pour maintenir un objet par aspiration avec une pression négative, dans un état dans lequel la partie d'aspiration (112) ne maintient pas un objet par aspiration ; et
une étape de détermination de détérioration consistant à : calculer un rapport de la déformation de la pluralité de régions de la partie d'aspiration (112) sur la base des informations sur la déformation de la pluralité de régions de la partie d'aspiration (112) dans un état dans lequel la partie d'aspiration (112) ne maintient pas un objet par aspiration, et si la partie d'aspiration (112) s'est détériorée ou non, en fonction de ce rapport.

5. Programme de commande pour amener un ordinateur à fonctionner comme l'appareil de détermination de détérioration (11) selon la revendication 1, dans lequel le programme de commande amène l'ordinateur à fonctionner comme l'unité d'obtention d'informations (113) et l'unité de détermination de détérioration (115).
